# EUROPÄISCHE PATENTSCHRIFT

(11) **EP 0 458 050 B1**
(45) Veröffentlichungstag und Bekanntmachung des Hinweises auf die Patenterteilung: **31.08.1994**
(21) Anmeldenummer: 91105733.9
(22) Anmeldetag: 11.04.1991
(51) Int. Cl.: B62D 5/07, B60K 25/00

(54) **Bedarfsoptimierter hydrostatischmechanischer Antrieb von Nebenaggregaten eines Kraftfahrzeuges mit Servolenkung**
Hydrostatic-mechanical drive with optimised energy consumption for auxiliaries of a motor vehicle with power steering
Entraînement hydrostatique-mécanique à consommation d'énergie optimisée pour les appareils auxiliaires d'un véhicule à moteur à direction assistée

(30) Priorität: 12.05.1990 DE 4015374; 28.05.1990 DE 4017095
(43) Veröffentlichungstag der Anmeldung: 27.11.1991
(73) Patentinhaber: MAN Nutzfahrzeuge Aktiengesellschaft, 80976 München (DE)
(72) Erfinder: Hagin, Faust, Dipl.-Ing., W-8000 München 2 (DE); Drewitz, Hans, Ing.-(grad.), W-8000 München 40 (DE)

(56) Entgegenhaltungen:
- EP-A- 0 052 527
- DE-A- 3 529 743
- FR-A- 1 354 687
- FR-A- 1 463 799
- FR-A- 1 539 130
- FR-A- 2 456 007
- GB-A- 818 797
- US-A- 4 189 919

## Beschreibung

Die Erfindung betrifft einen hydrostatisch-mechanischen Antrieb von Nebenaggregaten wie des Lüfters, Druckluftkompressors, der Wasserpumpe, Pumpe(n) einer Arbeitsgerätschaft eines Kraftfahrzeuges mit Servolenkung, mit Merkmalen entsprechend dem Oberbegriff des Anspruchs 1.

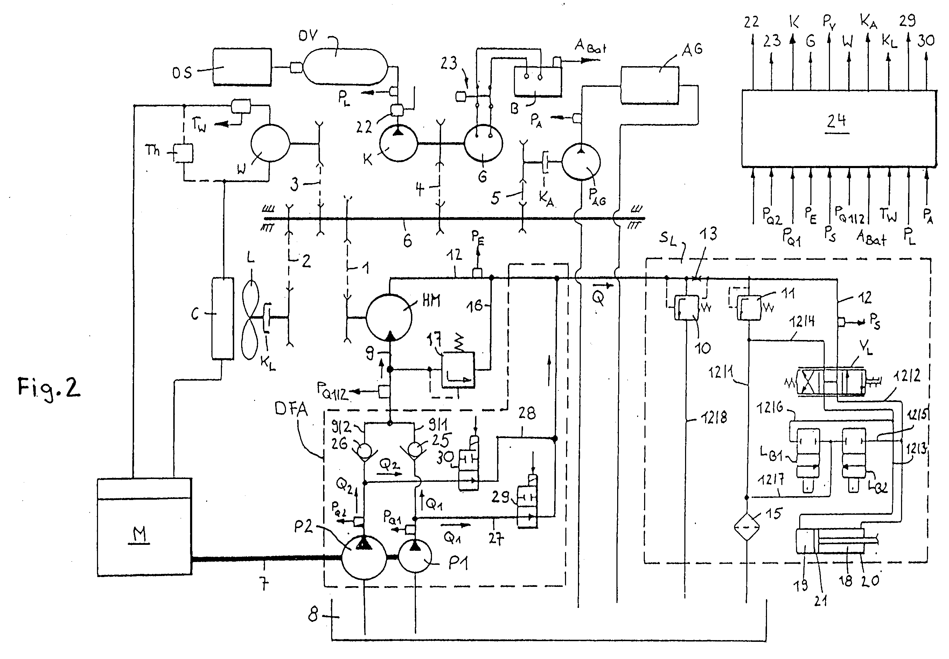

Die Erfindung geht aus von der FR-A-2 456 007, weiche einen solchen wie gattungsgemäß angegebenen Nebenaggregate-Antrieb in Fig. 2 mit zugehörigem Text offenbart. Zur Druckölversorgung des Hydrostatmotors ist dabei eine Kolbenpumpe vorgesehen, die unmittelbar vom Verbrennungsmotor angetrieben ist. Zur Regelung des Förderstromes hinsichtlich Menge und Druck ist der Kolbenpumpe saugseitig eine entsprechend verstellbare Drossel zugeordnet. Die Nebenaggregate sind direkt an der Abtriebswelle des Hydrostatmotors angeschlossen, wobei hierzu besonders darauf hingewiesen ist, daß hierdurch gesonderte Antriebe oder Keilriemen entfallen und die Nebenaggregate nicht mehr abgeregelt werden, weil aufgrund der kolbenpumpenseitigen Regelung an der Abtriebswelle eine konstante Drehzahl zur Verfügung gestellt wird.

Damit ist zwar ein bauteilmäßig reduzierter Antrieb der Nebenaggregate, aber kein bedarfsoptimierter Betrieb derselben erzielbar. Um eine in diese Richtung gehende Funktion zu erreichen, wird gemäß anderen Ausführungsbeispielen der FR-A-2 456 007 vorgeschlagen, jedem Nebenaggregat einen eigenen Hydrostatmotor mit jeweils auf den Betrieb des angetriebenen Nebenaggregates abgestimmter Abtriebsdrehzahl zuzuordnen. Eine Regelung des Betriebes der Nebenaggregate im Sinne einer dem tatsächlichen Bedarf der versorgten Verbraucher Rechnung tragenden Optimierung stellt dieses aber nicht dar.

Darüber hinaus ist zur Abrundung der der Erfindung zugrunde liegende Problematik auch noch auf jenen Stand der Technik eingegangen, wie aus Band 1, Beiträge zum Fachgebiet Hydraulik, des 9. Aachener fluidtechnischen Kolloquiums vom 20. bis 22. März 1990 bekannt.

Im Beitrag von M. Vötter 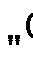 Chancen der Hydraulik in Kraftfahrzeugen", Seiten 179 bis 193, ist in Seite 185 unter anderem die Möglichkeit eines hydraulischen Antriebs der Lichtmaschine, Wasserpumpe, Schmiermittelpumpe und des Klimakompressors eines Kraftfahrzeuges erwähnt.

Im Beitrag von Dr. Kahrs 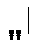 Hydroversorgungs-Systeme für verschiedene Funktionen in Pkw", Seiten 195 bis 214, ist die Möglichkeit eines hydrostatischen Antriebes von Nebenaggregaten eines Kraftfahrzeuges angesprochen, mit einer von der Brennkraftmaschine des Fahrzeugs aus antreibbaren, in offenem oder geschlossenem Kreislauf betriebenen Druckölförderanlage zur Versorgung eines Hydrostatmotors, an dem die Nebenaggregate mechanisch abgeschlossen sind. In Seiten 210 bis 213 sind dabei mehrere Prinzipien skizzenhaft mit Kurzbeschreibung dargelegt.

Im Beitrag von Dr. Overdiek 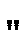 Förderstromregelkonzepte für hydraulische Nebenaggregateantriebe im Kraftfahrzeug", Seiten 215 bis 242, ist ebenfalls die Rede von einem zukünftig möglichen hydrostatischen Antrieb des Lüfters, Generators und Klimakompressors eines Kraftfahrzeuges mit von dessen Brennkraftmaschine aus angetriebener Pumpe und hydrostatisch von letzterer versorgtem Hydrostatmotor, an dem die besagten Nebenaggregate angekoppelt sind.

Im Beitrag von U. Altmann 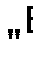 Elektronisch geregeltes hydrostatisches Gebläsesystem im Kraftfahrzeug", Seiten 243 bis 256, ist die Möglichkeit eines hydrostatischen Kraftfahrzeuglüfterantriebes aufgezeigt, wobei ein Pumpe-Motor-Kreislauf mit am Hydrostatmotor angekoppeltem Lüfter in verschiedenen Ausführungsmöglichkeiten skizzenhaft dargestellt und beschrieben ist.

Darüber hinaus ist in verschiedenen Beiträgen der besagten Veröffentlichung auch die Problematik der Druckölversorgung einer Servolenkung angesprochen. Dabei soll zum Verständnis erwähnt sein, daß bis zum damaligen Zeitpunkt der Gesetzgeber aus Sicherheitsgründen eine autarke Druckölversorgung für die Organe der Servolenkung durch eine eigene Lenkhilfepumpe vorgeschrieben hat. Eine solche Lenkhilfepumpe stellt neben den anderen Nebenaggregaten ein weiteres Zusatzaggregat dar, das den Gestehungspreis des Fahrzeugs noch erhöht.

Schließlich sei der Vollständigkeit wegen auch noch die DE-A-36 11 361 erwähnt. Hieraus ist ein hydrostatischer Antrieb von Nebenaggregaten eines Fahrzeugs wie z.B. Servolenkung, Lüfter, Kompressor bekannt. Der Lüfter und Kompressor sind von je einem eigenen Hydrostatmotor antreibbar, die jedoch nie gemeinsam, sondern nur alternativ nach Bedarf durch Umschaltung elektromagnetischer Ventilmittel mit dem für ihren Antrieb benötigten Strömungsmittel von einer Konstantpumpe her versorgt werden, die von der Brennkraftmaschine des Fahrzeugs aus angetrieben ist. Der von der Konstantpumpe erzeugte Förderstrom wird dabei von einem 3-Wege-Stromregelventil in einen der Servolenkung zugeführten Konstantstrom und einen Reststrom aufgeteilt, der an den Hydrostatmotoren wahlweise wirksam wird. Die Ein- und Ausschaltung der Hydrostatmotoren erfolgt abhängig von Schaltanforderungssignalen (Druckschalter am Kompressor, Temperaturfühler im Kühlmittelkreislauf) durch eine elektrische Steuereinrichtung, die auch die Umschaltung der Ventile für Umsteuerung der jeweils an einem der Hydrostatmotoren wirksamen Druckmittelströme bewirkt. Dies hat jedoch den Nachteil, daß dann, wenn ein dringender Leistungsbedarf gleichzeitig an beiden Hydrostatmotoren notwendig ist, z.B. wenn sowohl der Druckluftbehälter wegen zu starken Druckabfalles zu laden, gleichzeitig aber auch der Lüfter wegen zu hoher Kühlmitteltemperatur zu betreiben ist, diesem gleichzeitigen Leistungserfordernis nicht Rechnung getragen werden kann. Es wird grundsätzlich zuerst der Kompressor bedient, was zur Folge haben kann, daß wegen fehlender Lüftung der Motor zu heiß wird. Außerdem hat diese bekannte Lösung den Nachteil, daß primär die Servolenkung mit einem Konstantvolumenstrom versorgt ist, während die Hydrostatmotoren nur vom Reststrom gespeist werden, was sich bei starkem Leistungsbedarf am Nebenaggregat auch negativ auswirken kann.

Darüber hinaus ist es ein beanspruchtes Merkmal dieser bekannten Lösung, daß eine zweite elektromotorisch betreibbare Pumpe vorhanden ist, die zur bedarfsweisen Versorgung der Servolenkungsorgane dient. Diese Zusatzpumpe tritt anstelle der üblichen Lenkhilfepumpe, stellt zwar einen Sicherheitsaktivposten dar, erfordert aber auch einen entsprechenden Kostenmehraufwand. Außerdem erweist sich auch der Antrieb jedes Nebenaggregates durch einen eigenen Hydrostatmotor als kostenmäßig sehr aufwendig.

Es ist daher Aufgabe der Erfindung, den gattungsgemäßen hydrostatischmechanischen Antrieb so zu verbessern, daß ein bedarfsoptimierter Betrieb der Nebenaggregate unter Sicherstellung eines einwandfreien Betriebes der Servolenkung erzielbar ist.

Diese Aufgabe ist erfindungsgemäß durch durch die im Kennzeichen des Anspruchs 1 angegebenen Mittel/Vorkehrungen gelöst.

Vorteilhafte Ausgestaltungen und Details dieser Lösung sind in den Unteransprüchen angegeben.

Bei der erfindungsgemäßen Lösung tragen sowohl die getriebetechnischen als auch die schaltungstechnischen Maßnahmen in Verbindung mit der Steuerelektronik dazu bei, einen bedarfsoptimierten Betrieb der Nebenaggregate sicherzustellen. Da zum Antrieb der Nebenaggregate nur ein einziger Hydrostatmotor und vergleichsweise einfache Transmissionen notwendig sind, ergeben sich vertretbare Herstellkosten diesen Teil der Anlage betreffend. Andrerseits erlaubt diese Lösung eine hohe Flexibilität was Anordung/Unterbringung der Nebenaggregate anbelangt. Schließlich kommt die erfindungsgemäße Lösung mit einer vergleichsweise einfachen Druckölversorgungsanlage aus. Durch entsprechende Regelung des mit letzterer erzeugbaren, dem Hydrostatmotor zuzuführenden Druckölstromes lassen sich beispielsweise bei geringem abnehmerseitigem Leistungsbedarf die Nebenaggregate mit relativ niedrigen Drehzahlen betreiben. Andrerseits lassen sich so auch bei mit niedriger Drehzahl betriebenem Verbrennungsmotor genügend hohe Drehzahlen der Nebenaggregate erzielen. Statistisch gesehen können aufgrund der erfindungsgemäßen Lösung die Schleppverluste aller Nebenaggregate stark reduziert bzw. der Wirkungsgrad der Nebenaggregate im Vollastbetrieb erhöht werden. Um eine sichere Funktion der Servolenkung im erfindungsgemäßen System sicherzustellen, ist die Druckölversorgungsanlage so ausgelegt, daß diese auch bei Leerlauf des Verbrennungsmotors einen Druckölstrom bereitstellt, der jenem einer bisher notwendigen bzw. vom Gesetzgeber vorgeschriebenen Lenkhilfepumpe entspricht, wodurch auf letztere mithin verzichtet werden kann.

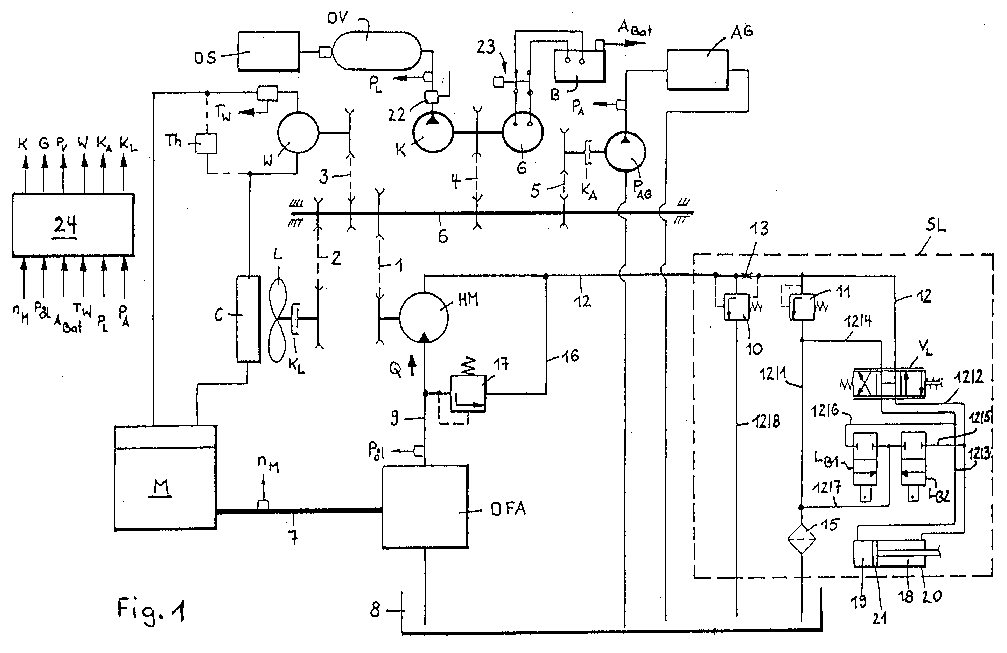

Nachstehend ist die erfindungsgemäße Lösung anhand von vier je in Fig. 1,2,3 und 4 der Zeichnung dargestellten Ausführungsbeispielen näher erläutert.

In der Zeichnung sind als Teile eines Krattfahrzeuges, bei dem es sich um einen Personenkrattwagen, ein Nutzfahrzeug, wie Lastkraftwagen oder Omnibus, handeln kann, dessen Verbrennungsmotor mit M, die auf die lenkbaren Räder einwirkende sowie deren Lenkbarkeit unterstützende Servolenkung mit SL, die Batterie mit B, der letztere speisende Generator mit G, das fahrzeuginterne Druckluftsystem mit DS, der/die zur Versorgung des letzteren dienende(n) Druckluftvorratsbehälter mit DV, der letztere(n) speisende Kompressor mit K, ein Kühlaggregat mit C, der zugehörige Lüfter mit L, die im Kühlmittelkreislauf des Verbrennungsmotors M wirkende Kühlmittel(Wasser)-Pumpe mit W, ein zu dessen Regelung dienender Thermostat mit Th, eine Arbeitsgerätschaft, z.B. Hub- und Senkorgane für einen Kippauflieger oder eine Ladeplattform mit AG und die zugehörige(n) Pumpe(n) mit P_{AG} bezeichnet.

Die Nebenaggregate des Kraftfahrzeuges - Kompressor K, Generator G, Lüfter L, Kühlmittelpumpe W, Pumpe (n) P_{AG}, gegebenenfalls auch weitere, z.B. ein Klimakompressor (sofern das Fahrzeug über eine Klimaanlage verfügt) - sind mechanisch von einem einzigen Hydrostatmotor HM aus antreibbar, und zwar jeweils einzeln oder gruppenweise über entsprechende mechanische Verbindungen bzw. Transmissionen, welche z.B. durch Riementriebe 1,2,3,4,5, gegebenenfalls - wie dargestellt - unter Zwischenschaltung einer Nebenwelle 6 realisierbar sind.

Der Hydrostatmotor HM wird von einer hinsichtlich Förderdruck und/oder Volumenstrom regelbaren, wenigstens eine vom Verbrennungsmotor M über Triebstrang 7 angetriebene Pumpe aufweisenden Druckölversorgungsanlage DFA mit aus einem Vorratstank 8 geförderten Druckölstrom über eine Druckzuleitung 9 gespeist. Die Druckölversorgungsanlage DFA kann auf verschiedene Art realisiert sein. In einer ersten Version besteht die Druckölversorgungsanlage DFA aus einer Konstantpumpe, einem Speicher und einem Abschalt-Zuschaltventil, wobei die Konstantpumpe in den Speicher fördert und der am Ausgang der Druckölversorgungsanlage DFA bereitzustellende Volumenstrom mit entsprechendem Druck durch regelungsseitige Einflußnahme auf das die Entladung steuernde Abschalt-Zuschaltventil bewirkt wird. In einer zweiten Version besteht die Druckölversorgungsanlage DFA aus einer stufenlos verstellbaren Pumpe, z.B. der Axialkolbenbauart, so daß durch entsprechende Regelung derselben ein exakt auf den Leistungsbedarf der anzutreibenden Nebenaggregate einstellbarer Druckölstrom ausgangs der Druckölversorgungsanlage DFA bereitstellbar ist. Diese beiden Versionen der Druckölversorgungsanlage DFA sind Bestandteil von Fig. 1, wobei dort die intern derselben gegebenen Einzelheiten nicht dargestellt sind. In einer dritten Version besteht die Druckölversorgungsanlage DFA - wie im Detail aus Fig. 2, 3 und 4 ersichtlich - aus zwei Konstantpumpen P1, P2 gleicher, vorzugsweise jedoch unterschiedlicher Förderleistung Q₁, Q₂. Die Förderleistung Q₁ der Konstantpumpe P1 kann beispielsweise auf Q₁ = Q₂/2, also die Hälfte der Förderleistung Q₂ der zweiten Konstantpumpe P2 ausgelegt sein. Die Gesamtförderleistung Q = Q₁ + Q₂ dieses Konstantpumpenaggregates ist auf den gleichzeitigen durchschnittlichen Leistungsbedarf aller anzutreibenden Nebenaggregate zusätzlich einer gewissen Leistungsreserve, gleichzeitig aber auch auf eine Mindestölfördermenge ausgelegt, die jener einer abgeregelten, im vorliegenden Fall jedoch nicht benötigten Lenkhilfepumpe entspricht.

Die Förderströme Q1, Q2 der beiden Konstantpumpen P1, P2 sind über nachstehend noch näher beschriebene Leitungswege und Ventileinrichtungen alternativ oder gemeinsam entweder unter Umgehung des Hydrostatmotors HM - falls dieser nicht angetrieben werden braucht - oder über den Hydrostatmotor HM - diesen dann antreibend - und die ausgangs des letzteren anschließende Druckölrücklaufleitung 12 den Organen der Servolenkung SL zu deren permanenter Versorgung mit einem Druckölstrom Q = Q1 + Q2 zuführbar.

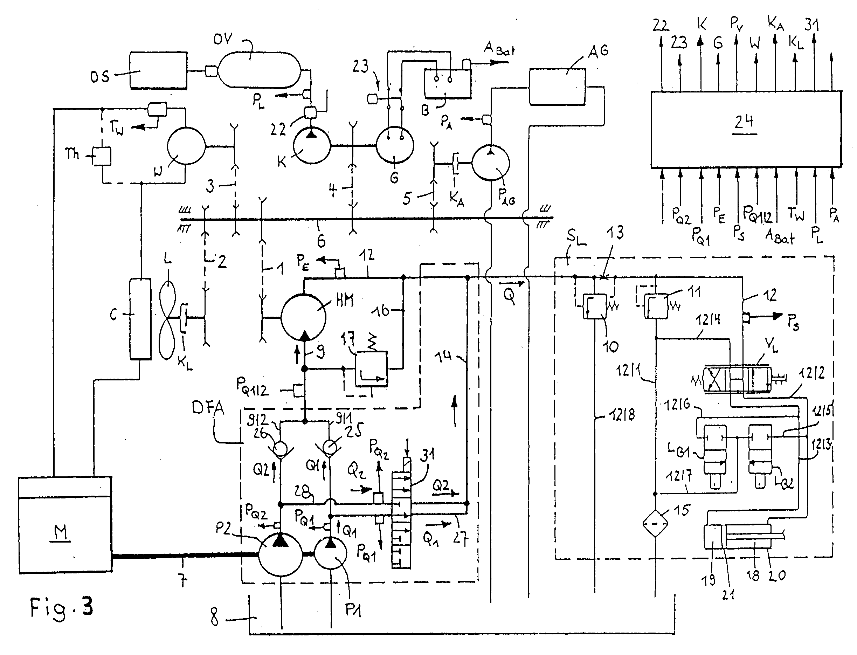

Im Fall der Beispiele gemäß Fig. 2 und 3 sind die Förderströme Q1, Q2 der beiden Konstantpumpen P1, P2 über jeweils ausgangsanschließende Druckleitungszweige 9/1,9/2 mit eingebauten, nur in Förderrichtung durchlässigen Rückschlagventilen 25,26 und die anschließende gemeinsame Druckleitung 9 dem Hydrostatmotor HM und von diesem oder über jeweils vom strömungsmäßig vor einem Rückschlagventil 25, 26 gegebenen Teil eines Druckleitungszweiges 9/1, 9/2 abzweigende Druckleitungszweige 27, 28, die mittels zweier Magnetventile 29, 30 (Fig. 2) oder eines 4/2-Wege-Magnetventiles 31 (Fig. 3), das vier Schaltstellungen einnehmen kann, alternativ absperrbar sowie alternativ oder gemeinsam auf Durchlaß schaltbar sind, der ausgangs des Hydrostatmotors HM anschließenden Druckölrücklaufleitung 12 zur Weiterleitung an die Organe der Servolenkung SL zuführbar. Wenn im Fall gemäß Fig. 2 beide Magnetventile 29, 30 auf Durchlaß geschaltet sind, bzw. wenn im Fall gemäß Fig. 3 sich das 4/2-Wege-Magnetventil 31 in einer Schaltstellung befindet, in der beide Druckleitungszweige 27,28 durchgeschaltet sind, dann erhält der Hydrostatmotor HM kein Drucköl zugeführt, die beiden Förderströme Q1 und Q2 werden unter Umgehung des letzteren direkt in die Druckölrücklaufleitung 12 eingeleitet. Wenn dagegen im Fall gemäß Fig. 2 das Magnetventil 30 in Sperrstellung geschaltet ist bzw. im Fall gemäß Fig. 3 sich das 4/2-Wege-Magnetventil 31 in einer Schaltstellung befindet, in der die Leitung 28 abgesperrt, die Leitung 27 dagegen offen ist, dann wird nur der Förderstrom Q1 der Konstantpumpe P1 direkt der Druckölrücklaufleitung 12 zugeführt, wohingegen der Hydrostatmotor HM, um die Nebenaggregate des Fahrzeugs mit entsprechender Leistung antreiben zu können, mit dem Förderstrom Q2 der Konstantpumpe P2 gespeist wird, der dann ausgangs des Hydrostatmotors HM ebenfalls in die Druckölrücklaufleitung 12 eingespeist und zusammen mit dem Förderstrom Q1 den Organen der Servolenkung SL zugeführt wird. Wenn dagegen im Fall gemäß Fig. 2 das Magnetventil 29 in Sperrstellung geschaltet ist bzw. im Fall gemäß Fig. 3 sich das 4/2-Wege-Magnetventil 31 in einer Schaltstellung befindet, in der die Leitung 27 abgesperrt, die Leitung 28 dagegen offen ist, dann wird nur der Förderstrom Q2 der Konstantpumpe P2 direkt der Druckölrücklaufleitung 12 zugeführt, wohingegen der Hydrostatmotor HM, um die Nebenaggregate des Fahrzeugs mit entsprechend niedrigerer Leistung antreiben zu können, nur mit dem Förderstrom Q1 der Konstantpumpe P1 gespeist wird, der dann ausgangs des Hydrostatmotors HM ebenfalls in die Druckölrücklaufleitung 12 eingespeist und zusammen mit dem Förderstrom Q2 den Organen der Servolenkung SL zugeführt wird. Wenn dagegen im Fall gemäß Fig. 2 beide Magnetventile 29,30 in Sperrstellung geschaltet bzw. im Fall gemäß Fig. 3 beide Druckleitungszweige 27,28 durch das in entsprechende Schaltstellung geschaltete 4/2- Wege-Magnetventil 31 abgesperrt sind, dann werden beide Förderströme Q1, Q2 zusammen dem Hydrostatmotor HM für Antrieb der Nebenaggregate mit maximaler Leistung und dann ausgangs des letzteren über die Druckölrücklaufleitung 12 den Organen der Servolenkung SL zugeführt.

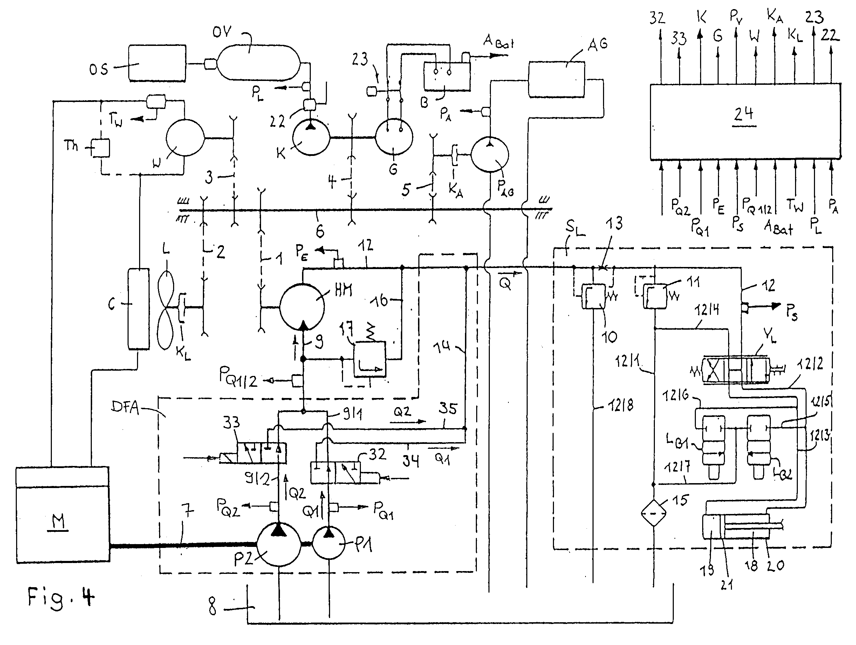

Im Fall des Beispieles gemäß Fig. 4 sind die Förderströme Q1, Q2 der beiden Konstantpumpen P1, P2 ebenfalls über ausgangs jeweils abgehende Druckleitungszweige 9/1,9/2, in die jeweils mit ihrem Eingang und einem der beiden Ausgänge angeschlossene 3/2-Wege-Magnetventile 32, 33, welche jeweils zwei Schaltstellungen einnehmen können, eingebaut sind, und die anschließende gemeinsame Druckleitung 9 dem Hydrostatmotor HM und von diesem oder über jeweils vom zweiten Ausgang eines der beiden 3/2-Wege-Magnetventile 32, 33 abgehende Druckleitungszweige 34,35 der ausgangs des Hydrostatmotors HM anschließenden Druckölrücklaufleitung 12 zur Weiterleitung an die Organe der Servolenkung SL zuführbar. Wenn beide 3/2-Wege-Magnetventile 32, 33 so geschaltet sind, daß die Verbindung zwischen Druckleitungszweigen 9/1 und 34 einerseits sowie 9/2 und 35 andererseits offen ist, dann erhält der Hydrostatmotor HM kein Drucköl zugeführt, die beiden Förderströme Q1, Q2 werden direkt unter Umgehung des letzteren in die Druckölrücklaufleitung 12 eingespeist. Wenn sich dagegen das 3/2-Wege-Magnetventil 32 in einer Schaltstellung befindet, in der die Verbindung zwischen den Druckleitungszweigen 9/1 und 34 offen ist, und wenn sich das 3/2-Wege-Magnetventil 33 in einer Schaltstellung befindet, in der nur der Druckleitungszweig 9/2 durchgeschaltet ist, dann wird nur der Förderstrom Q1 der Konstantpumpe P1 direkt der Druckölrücklaufleitung 12 zugeführt, wohingegen der Hydrostatmotor HM, um die Nebenaggregate des Fahrzeugs mit entsprechender Leistung antreiben zu können, mit dem Förderstrom Q2 der Konstantpumpe P2 gespeist wird, der dann ausgangs des Hydrostatmotors HM ebenfalls in die Druckölrücklaufleitung 12 eingespeist und zusammen mit dem Förderstrom Q1 den Organen der Servolenkung SL zugeführt wird. Wenn sich dagegen das 3/2-Wege-Magnetventil 33 in einer Schaltstellung befindet, in der die Verbindung zwischen den Druckleitungszweigen 9/2 und 35 offen ist, und wenn sich das 3/2-Wege-Magnetventil 32 in einer Schaltstellung befindet, in der nur der Druckleitungszweig 9/1 durchgeschaltet ist, dann wird nur der Förderstrom Q2 der Konstantpumpe P2 direkt der Druckölrücklaufleitung 12 zugeführt, während der Hydrostatmotor HM, um die Nebenaggregate des Fahrzeugs mit entsprechend geringerer Leistung antreiben zu können, mit dem Förderstrom Q1 der Konstantpumpe P1 gespeist wird, der dann ausgangs des Hydrostatmotors HM ebenfalls in die Druckölrücklaufleitung 12 eingeleitet und zusammen mit dem Förderstrom Q2 den Organen der Servolenkung SL zugeführt wird. Wenn dagegen beide Druckleitungszweige 9/1 und 9/2 durch entsprechende Schaltung der 3/2-Wege-Magnetventile 32,33 jeweils durchgeschaltet sind, dann werden beide Förderströme Q1, Q2 zusammen dem Hydrostatmotor HM für einen Antrieb der Nebenaggregate des Fahrzeugs mit maximaler Leistung und dann über die Druckölrücklaufleitung 12 den Organen der Servolenkung SL zugeführt.

Grundsätzlich wird eine Regelung des mittels der Druckölversorgungsanlage DFA bereitgestellten Druckölstromes angestrebt, die zusätzlich zur Drehzahloptimierung der vom Hydrostatmotor HM aus angetriebenen Nebenaggregate, gegebnenfalls auch unter Berücksichtigung einer Zu- und Abschaltung bzw. An- und Abkopplung derselben, eine Mindestölfördermenge entsprechend einer ersetzten, abgeregelten Lenkhilfepumpe bewirkt. Dabei kann der Arbeitsdruck des Ölförderstromes Q beispielsweise durch Last-Abschaltung oder Abkopplung des Generators G und/oder Lastabschaltung bzw. Abkopplung des Kompressors K begrenzt werden.

Die Druckölversorgung der ihrem Aufbau nach an sich bekannten Servolenkung SL erfolgt unter Verzicht auf die bislang notwendige Lenkhilfepumpe durch leitungsmäßige An- bzw. Einbindung der Organe 10 (Strombegrenzungsventil), 11 (Druckbegrenzungsventil), V_{L} (lenkradseitig betätigbares Lenkventil), L_{B1} und L_{B2} (Lenkbegrenzungsventile) der Servolenkung SL in den ausgangsseitigen Druckölrücklaufzweig 12 des Hydrostatmotors HM. Dies bedeutet, die besagten Organe der Servolenkung SL werden immer mit dem gesamten Förderstrom Q zu ihrem Betrieb versorgt. In Verbindung mit der Drossel 13 ist dabei durch das Strombegrenzungsventil 10 der Servolenkung SL der für die Lenkhilfe jeweils notwendige Druckmittelstrom einstellbar, überschüssiges Drucköl wird über die Leitung 12/8 zum Vorratstank 8 rückgeleitet. Mittels des Druckbegrenzungsventiles 11 der Servolenkung SL wird der für die jeweilige Lenkhilfe maximal zulässige Druck eingestellt, abgesteuertes Drucköl wird über den Leitungszweig 12/1 unter Durchströmung eines Ölfilters 15 zum Vorratstank 8 rückgeleitet. Mittels des Lenkventils V_{L} der Servolenkung SL ist in je einer der beiden von der mittleren Kurzschluß- bzw. Umlaufstellung verschiedenen Schaltstellungen Drucköl aus der Leitung 12 über Leitungszweig 12/2 bzw. 12/3 je einem der beiden Druckräume 18 bzw. 19 des Arbeitszylinders 20 der Servolenkung SL zuführbar, während der andere der beiden Druckräume 19 bzw. 18 über den jeweiligen Leitungszweig 12/3 bzw. 12/2 und den Entlastungszweig 12/4 ausgangs des Lenkventils V_{L}, der in den Leitungszweig 12/1 einmündet, entlastbar bzw. entladbar ist, so daß mittels des im Arbeitszylinder 20 wirkenden, die Druckräume 18, 19 voneinander trennenden Kolbens 21 über die daran angeschlossene Kolbenstange auf die Lenkung des Kraftfahrzeugs hydraulisch unterstützend eingewirkt werden kann. Die beiden, eingangsseitig über je einen Leitungszweig 12/5 bzw. 12/6 an je einem der beiden Leitungszweige 12/3 bzw. 13/3 und ausgangsseitig über einen gemeinsamen Entlastungszweig 12/7 angeschlossenen, je eine Absperrstellung und eine Durchlaßstellung ermöglichenden Lenkbegrenzungsventile LB₁ bzw. LB₂ bewirken, wenn in Durchlaßstellung geschaltet, eine Entlastung des jeweils angeschlossenen Leitungszweiges 12/2 bzw. 12/3 und damit eine Beendigung eines hydraulischen Lenkunterstützungsvorgangs in der einen oder anderen Richtung.

Um kurzfristigen Überlastungen des Hydrostatmotors HM infolge extrem hohen Leistungsbedarfs der angetriebenen Nebenaggregate vorzubeugen, ist der ausgangs der Druckölversorgungsanlage DFA in der Druckzuleitung 9 erscheinende Druckölförderstrom unter Umgehung des Hydrostatmotors HM über eine von der Druckzuleitung 9 abzweigende Bypaßleitung 16 mit entsprechend eingestelltem Druckbegrenzungs- und/oder Kurzschlußventil 17 in die Druckölrücklaufleitung 12 einspeisbar.

Um über die optimale Druckölversorgung der Servolenkung SL hinaus auch einen bedarfsoptimierten Betrieb der Nebenaggregate zu erreichen, ist eine entsprechende Lastzu- bzw. Lastabschaltung bzw. geregelter Betrieb oder An- und Abkopplung derselben anzustreben.

So ist es beispielsweise möglich, im Antriebsstrang des Lüfters L eine schaltbare Viskokupplung K_{L} (wie dargestellt) vorzusehen, mit der der Lüfter L nur bei entsprechendem Bedarf an den Antriebsstrang anschließbar, ansonsten jedoch von letzterem abgekoppelt ist. Die Kühlmittelpumpe W kann hinsichtlich ihres Fördervolumens durch einen thermostatischen Regelkreis (wie dargestellt) oder durch mechanische Vorkehrungen im Antriebsstrang geregelt werden. Der Druckluft-Kompressor K kann mittels eines Schaltventiles 22 durch Umschaltung des letzteren auf Ablaß in Atmosphäre mit Minimalförderleistung betrieben (wie dargestellt) oder durch Vorsehen einer schaltbaren Kupplung vom Antriebsstrang 4 getrennt werden. Ebenso kann der die Batterie B speisende Generator G über eine Schalteinrichtung 23 abgeschaltet (wie dargestellt) oder mittels einer schaltbaren Kupplung vom Antriebsstrang 4 getrennt werden. Die Pumpe(n) P_{AG} ist/sind durch schaltbare Kupplung(en) K_{A} vom Antriebsstrang 5 trennbar bzw. nur bei Bedarf an diesem anschließbar oder es ist/sind die Saugseite(n) und Druckseite(n) derselben kurzschließbar. In gleicher Weise wäre auch ein Klima-Kompressor (falls eine Klimaanlage vorhanden) zu- bzw. abschaltbar bzw. an- und abkoppelbar.

Zur Regelung des/der von der Druckölversorgungsanlage DFA bereitstellbaren Druckölstromes bzw. Druckölströme, die dem Hydrostatmotor HM sowie der Servolenkung SL zugeführt werden, sowie zur Erzielung eines bedarfsoptimierten Betriebes der Nebenaggregate ist eine vorzugsweise elektronische Steuereinheit 24 vorgesehen, die einen Mikroprozessor, Daten- und Programmspeicher sowie eine entsprechende Ein- und Ausgabeperipherie aufweist. Im Fall gemäß Fig. 1 wird dabei Einfluß genommen auf Förderleistung und/oder -druck durch entsprechende Verstellung der Pumpe oder die Lade- und Entladevorgänge eines Speichers der Druckölversorgungsanlage DFA. Im Fall gemäß Fig. 2 bis 4 wird dabei Einfluß genommen auf Förderleistung und/oder -druck durch entsprechende Schaltung des Magnetventiles 31 bzw. der Magnetventile 29,30 bzw. 32,33.

Im Fall gemäß Fig. 1 errechnet die Steuereinheit 24 auf der Basis eingespeicherter Werte bzw. Kennfelddaten anhand zugeführter Istwertdaten wie n_{M} (Drehzahl Triebstrang 7), P_{ÖL} (Druck Druckölsstrom ausgangs von DFA in Leitung 9), A_{Bat} (Ladungszustand Batterie B), P_{L} (Druck im Druckluftvorratsbehälter DV), T_{W} (Temperatur im Kühlmittelkreislauf des Verbrennungsmotors M), P_{A} (Arbeitsdruck für Arbeitsgerätschaft) und dergleichen mehr (soweit notwendig für Regelung) die notwendigen Regelmaßnahmen und gibt dann entsprechende Regel- bzw. Schaltbefehle an die angeschlossenen Organe bzw. Aggregate aus.

Im Fall gemäß Fig. 2 bis 4 errechnet die Steuereinheit 24 auf der Basis eingespeicherter Werte bzw. Kennfelddaten anhand sensormäßig erfaßter und zugeführter lstwertdaten wie P_{Q1}, P_{Q2} (Druck der Volumenströme in Leitungszweigen 9/1, 27 bzw. 9/2, 28), P_{S} (Steuerdruck Servolenkung), P_{Q1}/2 (Gesamtdruck der Volumenströme Q₁ + Q₂ in Leitung 9), P_{E} (Druck des Volumenstroms in der Druckölrücklaufleitung 12), A_{Bat} (Ladungszustand Batterie B), P_{L} (Druck im Druckluftvorratsbehälter DV), T_{W} (Temperatur im Kühlmittelkreislauf des Verbrennungsmotors M), P_{A} (Arbeitsdruck für Arbeitsgerätschaft) und dergleichen mehr (soweit notwendig für Regelung) die notwendigen Regelmaßnahmen und gibt dann entsprechende Regel- bzw. Schaltbefehle an die angeschlossenen Organe bzw. Aggregate aus.

Dabei wird durch die Einflußnahme der Steuereinheit 24 generell, d.h. unabhängig von der Art der Druckölversorgungsanlage DFA, auch bei maximaler Leistungsanforderung der anzutreibenden Nebenaggregate außer einer permanenten Bereitstellung eines zur Versorgung der Servolenkung SL genügenden Druckölförderstromes über die Druckölrücklaufleitung 12 und bei Ausfall der Regelung auch unter Umgehung des Hydrostatmotors HM über die Bypaßleitung 16, gegebenenfalls durch eine Prioritätenregelung hinsichtlich der Notwendigkeit zu betreibender Nebenaggregate, eine Regelung des von der Druckölförderanlage DFA bereitzustellenden Druckölförderstromes bewirkt, die auf einen geringstmöglichen Aufwand an vom Verbrennungsmotor M abzuzweigender Energie und einen schleppverlustarmen Betrieb der Nebenaggregate abgestellt ist.

## Patentansprüche

1. Hydrostatisch-mechanischer Antrieb von Nebenaggregaten wie des Lüfters (L), Druckluftkompressors (K), Generators (G), Klimakompressors, der Kühlmittelpumpe (W), Pumpe(n) (P_{AG}) einer Arbeitsgerätschaft (AG) eines Kraftfahrzeugs mit Servolenkung, wobei die Nebenaggregate von einem Hydrostatmotor (HM) aus antreibbar sind, dieser von einer wenigstens eine vom Verbrennungsmotor aus betriebene Pumpe enthaltenden Druckölversorgungsanlage (DFA) mit einem von letzterer hinsichtlich Druuck und/oder Volumen geregelten Druckölstrom gespeist wird und die Druckölversorgung der Servolenkung (SL) unter Verzicht auf eine Lenkhilfepumpe durch leitungsmäßige Anbindung der Organe (10,11, V_{L}, 20, L_{B1}, L_{B2}) der Servolenkung (SL) an die ausgangsseitige Druckölrücklaufleitung (12) des Hydrostatmotors (HM) erfolgt, dadurch gekennzeichnet, daß die Nebenaggregate (L, W, K, G, P_{AG}) über Transmissionen, insbesondere Riementransmissionen (1, 2, 3, 4, 5) von der Welle des Hydrostatmotors (HM) aus antreibbar sind, daß ferner zumindest einige der Nebenaggregate durch schaltbare Kupplungen (K_{L}, K_{A}) in bzw. außer Wirkverbindung mit der jeweiligen Transmissionen bringbar, andere Nebenaggregate dagegen durch andere schaltbare Organe (Th 22, 23) bezüglich der zu versorgenden Anlage (DV, B) zu- oder abschaltbar sind, und daß eine elektronische, rechnergestützt arbeitende Steuereinrichtung (24) vorgesehen ist, durch deren Befehle eine Regelung des dem Hydrostatmotor (HM) zuzuführenden Druckölstromes sowie eine Zu- und Abschaltung bzw. An- und Abkupplung der Nebenaggregate im Sinne eines bedarfsoptimierten Betriebes derselben sowie einer hinreichenden Druckölversorgung der Organe der Servolenkung (SL) herbeiführbar ist.

2. Hydrostatisch-mechanischer Antrieb von Nebenaggregaten nach Anspruch 1, dadurch gekennzeichnet, daß die Druckölversorgungsanlage (DFA) eine stufenlos verstellbare Pumpe (P) insbesondere der Axialkolbenbauart aufweist.

3. Hydrostatisch-mechanischer Antrieb von Nebenaggregaten nach Anspruch 1, dadurch gekennzeichnet, daß die Druckölversorgungsanlage (DFA) zwei vom Verbrennungsmotor (M) angetriebene Konstantpumpen (P1, P2) aufweist, deren Ausgangsleitungen (9/1,9/2) einerseits mit der zum Hydrostatmotor (HM) führenden Druckleitung (9) und andrerseits über Leitungswege (27, 28; 34, 35) mit der ausgangs des Hydrostatmotors (HM) angeschlossenen Druckölrücklaufleitung (12) verbunden sind, und daß in besagten Leitungswegen (9/1, 9/2 bzw. 27, 28; 34, 35) Ventileinrichtungen (29, 30; 31; 32, 33) gegeben sind, die durch Befehle der elektronischen Steuereinrichtung (24) in der Weise schaltbar sind, daß die ausgangs der Konstantpumpen (P1, P2) gegebenen Förderströme (Q1, Q2) entweder alternativ oder gemeinsam entweder
a) dem Hydrostatmotor (HM), diesen dann mit entsprechender Leistung antreibend, oder
b) unter Umgehung des Hydrostatmotors (HM), falls dieser nicht angetrieben werden soll, der ausgangs des letzteren anschließenden Druckölrücklaufleitung (12)
zugeführt werden, somit die Organe der Servolenkung (SL) immer mit einem Druckölstrom Q = Q1 + Q2 versorgt sind.

4. Hydrostatisch-mechanischer Antrieb von Nebenaggregaten nach Anspruch 3, dadurch gekennzeichnet, daß die beiden Konstantpumpen (P1, P2) auf eine unterschiedliche Förderleistung (Q1, Q2) ausgelegt sind.

5. Hydrostatisch-mechanischer Antrieb von Nebenaggregaten nach Anspruch 4, dadurch gekennzeichnet, daß die leistungsschwächere (P1) der beiden Konstantpumpen (P1, P2) hinsichtlich ihrer Förderleistung (Q1) auf die Hälfte der Förderleistung (Q2) der leistungsstärkeren Konstantpumpe (P2) ausgelegt ist.

6. Hydrostatisch-mechanischer Antrieb von Nebenaggregaten nach einem der Ansprüche 3 bis 5, dadurch gekennzeichnet, daß die beiden Konstantpumpen (P1, P2) hinsichtlich ihrer Gesamtförderleistung Q = Q1 + Q2 auf eine Mindestölfördermenge ausgelegt sind, die jener einer abgeregelten, aber im vorliegenden Fall ersetzten Lenkhilfepumpe entspricht.

7. Hydrostatisch-mechanischer Antrieb von Nebenaggregaten nach den Ansprüchen 3 bis 6, dadurch gekennzeichnet, daß die Gesamtförderleistung Q = Q1 + Q2 der beiden Konstantpumpen (P1, P2) auf den gleichzeitigen durchschnittlichen Leistungsbedart aller anzutreibenden Nebenaggregate zuzüglich einer gewissen Leistungsreserve ausgelegt ist.

8. Hydrostatisch-mechanischer Antrieb von Nebenaggregaten nach Anspruch 3, dadurch gekennzeichnet, daß in die Ausgangsleitung (9/1, 9/2) jeder Konstantpumpe (P1, P2) ein nur in Förderrichtung durchlässiges Rückschlagventil (25, 26) eingebaut ist, und daß die Leitungswege (27, 28) von den Ausgangsleitungen (9/1, 9/2) jeweils strömungsmäßig vor dem Rückschlagventil (25, 26) abzweigen.

9. Hydrostatisch-mechanischer Antrieb von Nebenaggregaten nach Anspruch 8, dadurch gekennzeichnet, daß in jedem der beiden Leitungswege (27, 28) ein einfaches Absperr-/Durchlaß-Magnetventil (29, 30) eingebaut ist, das von der elektronischen Steuereinrichtung (24) für die angestrebte Druckölstrom-Steuerung entsprechend schaltbar ist.

10. Hydrostatisch-mechanischer Antrieb von Nebenaggregaten nach Anspruch 8, dadurch gekennzeichnet, daß in die beiden Leitungswege (27, 28) ein gemeinsames 4/2-Wege-Magnetventil (31) eingebaut ist, das von der elektronischen Steuereinrichtung (24) für die angestrebte Druckölstrom-Steuerung entsprechend in vier mögliche Schaltstellungen schaltbar ist.

11. Hydrostatisch-mechanischer Antrieb von Nebenaggregaten nach Anspruch 3, dadurch gekennzeichnet, daß in die Ausgangsleitung (9/1, 9/2) jeder Konstantpumpe (P1, P2) ein 3/2-Wege-Magnetventil (32, 33) eingebaut ist, wobei an dessen Eingang der zugeführte Abschnitt der betreffenden Ausgangsleitung (9/1, 9/2), an dessen erstem Ausgang der abgehende Abschnitt der betreffenden Ausgangsleitung (9/1, 9/2) und an dessen zweiten Ausgang einer der beiden Leitungswege (34, 35) angeschlossen ist, und daß die 3/2-Wege-Magnetventile (32, 33) von der elektronsichen Steuereinrichtung (24) für die angestrebte Druckölstrom-Steuerung entsprechend in zwei jeweils mögliche Schaltstellungen schaltbar sind.

12. Hydrostatisch-mechanischer Antrieb von Nebenaggregaten nach Anspruch 3, dadurch gekennzeichnet, daß zur Überwachung der Druckölströme mehrere Druck-Sensoren vorgesehen sind.

13. Hydrostatisch-mechanischer Antrieb von Nebenaggregaten nach einem der Ansprüche 2 und 3, dadurch gekennzeichnet, daß - um kurzzeitige Überlastungen des Hydrostatmotors (HM) infolge eines extrem hohen Leistungsbedarfes der angetriebenen Nebenaggregate zu vermeiden - der dem Hydrostatmotors (HM) zugeführte Druckölstrom (Q bzw. Q1 + Q2) teilweise an letzterem über eine dessen eingangsseitige Druckölzuleitung (9) und ausgangsseitige Druckölrücklaufleitung (12) verbindende Bypaß-Leitung (16) mit Druckbegrenzungs- und/oder Kurzschlußventil (17) vorbei in die Druckölrücklaufleitung einspeisbar ist.

14. Hydrostatisch-mechanischer Antrieb von Nebenaggregaten nach Anspruch 1, dadurch gekennzeichnet, daß die Transmissionen (1, 2, 3, 4, 5), über die die mechanische Verbindung zwischen Welle Hydrostatmotor (HM) und Wellen der Nebenaggregate (L, W, K, G, P_{AG}) hergestellt ist, über eine zwischengeschaltete Nebenwelle (6) führen.

15. Hydrostatisch-mechanischer Antrieb von Nebenaggregaten nach Anspruch 2, dadurch gekennzeichnet, daß die zur Regelung des Druckölförderstromes (Q) und bedarfsoptimierten Betriebes der Nebenaggregate, deren Zu- und Abschaltung bzw. An- und Abkopplung sowie einer genügenden Druckölversorgung der Organe der Servolenkung (SL) dienende elektronische Steuereinrichtung (24) einen Mikroprozessor, Daten- und Programmspeicher sowie eine entsprechende Ein- und Ausgabeperipherie aufweist.

16. Hydrostatisch-mechanischer Antrieb von Nebenaggregaten nach Anspruch 3, dadurch gekennzeichnet, daß die zur Regelung des dem Hydrostatmotor (HM) und der Servolenkung (SL) zuzuführenden Druckölstromes durch entsprechende Schaltung des Magnetventiles (31) bzw. der Magnetventile (29, 30; 32, 33) sowie zur Erzielung eines bedarfsoptimierten Betriebes der anzutreibenden Nebenaggregate, gegebenenfalls deren Zu- und Abschaltung bzw. An- und Abkopplung dienende elektronische Steuereinrichtung (24) einen Mikroprozessor, Daten- und Programmspeicher sowie eine entsprechende Ein- und Ausgabeperipherie aufweist.

17. Hydrostatisch-mechanischer Antrieb nach einem der Ansprüche 2 und 3, dadurch gekennzeichnet, daß von der elektronischen Steuereinrichtung (24) eine Regelung des von der Druckölförderanlage (DFA) zu erzeugenden, dem Hydrostatmotor (HM) zuzuführenden Druckölstromes in dem Sinne bewirkt wird, daß zusätzlich zur Drehzahloptimierung der vom Hydrostatmotor (HM) aus angetriebenen Nebenaggregate (L, W, K, G, P_{AG}) in Verbindung mit deren Zu- und Abschaltung bzw. An- und Abkupplung den Organen der Servolenkung (SL) eine Mindestölfördermenge zuführbar ist, die jener einer ersetzten, abgeregelten Lenkhilfepumpe entspricht.

18. Hydrostatisch-mechanischer Antrieb nach einem der Ansprüche 2 und 3, dadurch gekennzeichnet, daß von der elektronischen Steuereinrichtung (24) eine Regelung des von der Druckölförderanlage (DFA) zu erzeugenden, dem Hydrostatmotor (HM) zuzuführenden Druckölstromes in dem Sinne bewirkt wird, daß dessen Arbeitsdruck durch Abschalten bzw. Abkuppeln bestimmter Nebenaggregate, insbesondere des Generators (G) und/oder Druckluftkompressors (K) begrenzbar ist.

## Claims

1. Hydrostatic-mechanical drive for secondary units such as the fan (L), air compressor (K), generator (G), air conditioning compressor, coolant pump (W), pump(s) (P_{AG}) of machines (AG) of a motor vehicle with power-assisted steering, the secondary units being able to be driven by a hydrostatic motor (HM), which is supplied with a flow of pressure oil from a pressure oil supply system (DFA) equipped with at least one pump driven by the internal combustion engine, which pressure oil supply system controls the pressure and/or volume of the pressure oil flow, the pressure oil supply for the power-assisted steering (SL) being effected without a power steering pump by means of a line connection from the organs (10, 11, V_{L}, 20, L_{B1}, L_{B2}) of the power-assisted steering (SL) to the pressure oil return line (12) at the output end of the hydrostatic motor (HM), characterised in that the secondary units (L, W, K, G, P_{AG}) can be driven via transmissions, particularly belt drives (1, 2, 3, 4, 5) from the shaft of the hydrostatic motor (HM), that also at least some of the secondary units can be effectively connected with and disconnected from the individual transmissions by clutches (K_{L}, K_{A}), that other secondary units can, by means of other shiftable organs (Th 22, 23), be switched on and off with regard to the system (DV, B) to be supplied, and that an electronic, computer-aided control unit (24) is fitted, by whose commands the pressure oil flow to be supplied to the hydrostatic motor (HM) can be controlled and the secondary units be switched on and off and connected and disconnected to permit both requirement-optimised operation of the said secondary units and a sufficient pressure oil supply to the organs of the power-assisted steering (SL).

2. Hydrostatic-mechanical drive for secondary units as under Claim 1, characterised in that the pressure oil supply system (DFA) is fitted with an infinitely variable pump (P), particularly an axial piston pump.

3. Hydrostatic-mechanical drive for secondary units as under Claim 1, characterised in that the pressure oil supply system (DFA) is fitted with two constant pumps (P1, P2) driven by the internal combustion engine (M), the output lines (9/1, 9/2) of which constant pumps (P1, P2) are connected, on the one hand, with the pressure line (9) leading to the hydrostatic motor (HM) and, on the other hand, via lines (27, 28; 34, 35), with the pressure oil return line (12) connected at the output end of the hydrostatic motor (HM), and that valves (29, 30; 31; 32, 33) are fitted in the said lines (9/1, 9/2 and 27, 28; 34, 35), which valves can be switched by commands from the electronic control unit (24) in such a way that the delivery flows (Q1, Q2) at the output end of the constant pumps (P1, P2) can be supplied either alternatively or together to either
a) the hydrostatic motor (HM), which is then driven by the said delivery flows with the power required, or
b) the pressure oil return line (12) connected at the output end of the hydrostatic motor (HM), which is bypassed if it is not to be driven,
so that the organs of the power-assisted steering (SL) are always supplied with a pressure oil flow Q = Q1 + Q2.

4. Hydrostatic-mechanical drive for secondary units as under Claim 3, characterised in that the two constant pumps (P1, P2) are designed for different delivery rates (Q1, Q2).

5. Hydrostatic-mechanical drive for secondary units as under Claim 4, characterised in that the constant pump (P1), which has the lower output of the two constant pumps (P1, P2), is, with regard to its delivery rate (Q1), designed for half of the delivery rate (Q2) of the constant pump (P2), which has the higher output.

6. Hydrostatic-mechanical drive for secondary units as under one of the Claims 3 to 5, characterised in that the two constant pumps (P1, P2) are, with regard to their overall delivery rate Q = Q1 + Q2, designed for a minimum delivery quantity equal to that of a limited power steering pump, which is replaced in this case.

7. Hydrostatic-mechanical drive for secondary units as under the Claims 3 to 6, characterised in that the overall delivery rate Q = Q1 + Q2 of the two constant pumps (P1, P2) is designed for the simultaneous average power requirement of all secondary units to be driven plus a certain power reserve.

8. Hydrostatic-mechanical drive for secondary units as under Claim 3, characterised in that a check valve (25, 26) which permits flow only in the direction of delivery is installed in the output line (9/1, 9/2) of each constant pump (P1, P2) and that, with regard to the flow, the lines (27, 28) branch off from the output lines (9/1, 9/2) before the check valve (25, 26).

9. Hydrostatic-mechanical drive for secondary units as under Claim 8, characterised in that a single shut-off/flow solenoid valve (29, 30) which can be correspondingly switched by the electronic control unit (24) to achieve the required pressure oil flow control is installed in each of the two lines (27, 28).

10. Hydrostatic-mechanical drive for secondary units as under Claim 8, characterised in that a joint 4/2-way solenoid valve (31) is installed in the two lines (27, 28), which valve (31) can, according to the intended pressure oil flow control, be switched to four possible switching positions by the electronic control unit (24).

11. Hydrostatic-mechanical drive for secondary units as under Claim 3, characterised in that a 3/2-way solenoid valve (32, 33) is installed in the output line (9/1, 9/2) of each constant pump (P1, P2), the ingoing section of the relevant output line (9/1, 9/2) being connected to the input of the said valve (32, 33), the outgoing section of the relevant output line (9/1, 9/2) being connected to the first output of the said valve (32, 33), and one of the two lines (34, 35) being connected to the second output of said valve (32, 33) and that the electronic control unit (24) can switch each of the 3/2-way solenoid valves (32, 33), to two possible switching positions according to the intended pressure oil flow control.

12. Hydrostatic-mechanical drive for secondary units as under Claim 3, characterised in that several pressure sensors are fitted to monitor the pressure oil flows.

13. Hydrostatic-mechanical drive for secondary units as under one of the Claims 2 and 3, characterised in that, in order to avoid momentarily overloading the hydrostatic motor (HM) as a result of extremely high power requirements from the driven secondary units, the pressure oil flow (Q, ie Q1 + Q2) supplied to the hydrostatic motor (HM) can be fed into the pressure oil return line, partially bypassing the said hydrostatic motor (HM) by means of a bypass line (16) with a pressure limiting and/or short-circuit valve (17), which bypass line (16) connects the pressure oil input line (9) on the input side of the said hydrostatic motor (HM) and the pressure oil return line (12) on the output side of the said hydrostatic motor (HM).

14. Hydrostatic-mechanical drive for secondary units as under Claim 1, characterised in that the transmissions (1, 2, 3, 4, 5) forming the mechanical link between the shaft of the hydrostatic motor (HM) and the shafts of the secondary units (L, W, K, G, P_{AG}) run via an intermediate secondary shaft (6).

15. Hydrostatic-mechanical drive for secondary units as under Claim 2, characterised in that the electronic control unit (24) for controlling the pressure oil delivery flow (Q) and the requirement-optimised operation of the secondary units, for switching on and off and engaging and disengaging the said secondary units as well as for supplying the organs of the power-assisted steering (SL) with sufficient pressure oil is equipped with a microprocessor, a data and program memory and a corresponding input and output periphery.

16. Hydrostatic-mechanical drive for secondary units as under Claim 3, characterised in that the electronic control unit (24) for controlling the pressure oil flow to be supplied to the hydrostatic motor (HM) and the power-assisted steering (SL) by corresponding switching of the solenoid valve (31) or the solenoid valves (29, 30; 32, 33), for achieving a requirement-optimised operation of the secondary units to be driven and, if necessary, for switching on and off and engaging and disengaging the said secondary units, is equipped with a microprocessor, a data and program memory and a corresponding input and output periphery.

17. Hydrostatic-mechanical drive for secondary units as under one of the Claims 2 and 3, characterised in that the electronic control unit (24) controls the pressure oil flow to be generated by the pressure oil delivery system (DFA) and to be supplied to the hydrostatic motor (HM) in the sense that, in addition to the speed optimisation of the secondary units (L, W, K, G, P_{AG}) driven from the hydrostatic motor (HM) in connection with switching on and off and engaging and disengaging the said secondary units, a minimum oil delivery quantity can be supplied to the organs of the power-assisted steering (SL), which quantity is equal to that of a replaced, limited power steering pump.

18. Hydrostatic-mechanical drive for secondary units as under one of the Claims 2 and 3, characterised in that the electronic control unit (24) controls the pressure oil flow to be generated by the pressure oil delivery system (DFA) and to be supplied to the hydrostatic motor (HM) in the sense that the working pressure of the said pressure oil flow can be limited by switching off or disengaging certain secondary units, particularly the generator (G) and/or air compressor (K).

## Revendications

1. Entraînement hydrostatique-mécanique d'appareils auxiliaires tels que le ventilateur (L), le compresseur d'air (K), des générateurs (G), des compresseurs de climatisation, la pompe à liquide de refroidissement (W), des pompes (P_{AG}), d'un groupe d'appareils (AG), d'un véhicule à moteur équipé d'une direction assistée, les appareils auxiliaires étant entraînés à partir d'un moteur hydrostatique-mécanique (HM), lui-même alimenté à partir d'une installation d'alimentation en huile sous pression (DFA) comportant une pompe entraînée par le moteur à combustion thermique, cette installation fournissant un débit de liquide sous pression, qu'elle régule en pression et/ou en volume, et l'alimentation en huile sous pression de la direction assistée (SL) se fait sans pompe auxiliaire de direction par un raccordement des organes (10, 11, V_{L}, 20, L_{B1}, L_{B2}) de la direction assistée (SL) par les conduites à la conduite de l'huile sous pression (12) en sortie du moteur hydrostatique (HM), entraînement caractérisé en ce que les appareils auxiliaires (L, W, K, G, P_{AG}) sont entraînés par l'intermédiaire de transmissions notamment de transmissions à courroies (1, 2, 3, 4, 5) à partir de l'arbre du moteur hydrostatique (HM), et au moins certains des appareils auxiliaires coopèrent avec les transmissions respectives par des embrayages commutés (K_{L}, K_{A}) pour les mettre en service ou hors service, d'autres appareils auxiliaires étant branchés ou coupés par d'autres organes commutables (Th 22, 23) par rapport à l'installation d'alimentation (DV, B) et une installation de commande (24) électronique, travaillant avec un calculateur, dont les ordres assurent la régulation du débit d'huile sous pression alimentant le moteur hydrostatique (HM), ainsi que la mise en service ou hors service ou l'embrayage ou le débrayage des appareils auxiliaires dans le sens d'un fonctionnement optimisé quant à sa consommation et d'une alimentation suffisante en huile sous pression des organes de la direction assistée (SL).

2. Entraînement hydrostatique-mécanique d'appareils auxiliaires selon la revendication 1, caractérisé en ce que l'installation d'alimentation en huile sous pression (DFA) est une pompe (P) réglable en continu notamment une pompe à pistons axiaux.

3. Entraînement hydrostatique-mécanique selon la revendication 1, caractérisé en ce que l'installation d'alimentation en huile sous pression (DFA) comprend deux pompes à débit constant (P1, P2) entraînées par le moteur à combustion interne (M) dont les conduites de sortie (9/1, 9/2) sont d'une part reliées à la conduite sous pression (9) reliée au moteur hydrostatique (HM) et d'autre part par des chemins (27, 28 ; 34, 35) à la conduite de retour d'huile sous pression (12) reliée à la sortie du moteur hydrostatique (HM) et en ce que dans chemin de conduite (9/1, 9/2)=, ou 27, 28 ; 34, 35) les installations de soupape (29, 30 ; 31 ; 32, 33) sont commutées par des ordres de l'installation de commande électronique (24) de façon que les débits (Q1, Q2) fournis à la sortie des pompes à débit constant (P1, P2) alimentent soit en alternance, soit en commun,
a) le moteur hydrostatique (HM) pour l'entraîner avec une puissance correspondante ou,
b) en contournant le moteur hydrostatique (HM), dans le cas où celui-ci ne doit pas être entraîné, la conduite de retour de l'huile sous pression (12) reliée à la sortie du moteur, pour que les organes de la direction assistée (SL) soient toujours alimentés par un débit de liquide sous pression Q = Q1 + Q2.

4. Entraînement hydrostatique-mécanique selon la revendication 3, caractérisé en ce que les deux pompes à débit constant (P1, P2) sont conçues pour fournir des débits différents (Q1, Q2).

5. Entraînement hydrostatique-mécanique selon la revendication 4, caractérisé en ce que celle (P1) des deux pompes à débit constant (P1, P2) à débit le plus faible (Q1) est conçue pour fournir un débit égal à la moitié du débit (Q2) de la pompe à débit constant le plus fort.

6. Entraînement hydrostatique-mécanique selon l'une des revendications 3 à 5, caractérisé en ce que les pompes à débit constant (P1, P2) sont conçues quant à leur débit total Q = Q1 + Q2 pour un débit minimum qui correspond à celui d'une pompe auxiliaire de direction, régulée, et remplacée dans le cas présent.

7. Entraînement hydrostatique-mécanique selon les revendications 3 à 6, caractérisé en ce que le débit total Q = Q1 + Q2 des deux pompes à débit constant (P1, P2) est conçu pour la demande en puissance, moyenne de tous les appareils auxiliaires entraînés y compris une certaine réserve de puissance.

8. Entraînement hydrostatique-mécanique selon la revendication 3, caractérisé en ce que dans la ligne de sortie (9/1, 9/2) de chaque pompe à débit constant (P1, P2), il n'y a qu'un clapet anti-retour (25, 26) passant dans le sens du débit et en ce que les chemins de conduite (27, 28) des conduites de sortie (9/1, 9/2) dérivent respectivement en amont des clapets anti-retour (25, 26).

9. Entraînement hydrostatique-mécanique selon la revendication 8, caractérisé en ce que dans chacune des deux branches de conduite (27, 28), se trouve une électrovanne simple ouverte/fermée (29) commandée par l'installation de commande électronique (24) pour commander le débit d'huile sous pression voulu.

10. Entraînement hydrostatique-mécanique selon la revendication 8, caractérisé en ce que sur les deux branches de conduite (27, 28) est placée une électrovanne à 4/2 voies (31), commune, qui est commandée par l'installation de commande électronique (24) pour la commande voulue du débit d'huile sous pression dans quatre positions de commutation possibles.

11. Entraînement hydroscatique-mécanique selon la revendication 3, caractérisé en ce que la ligne de sortie (9/1, 9/2) de chaque pompe è débit constant (P1, P2) comporte une électrovanne à 3/2 voies (32, 33), dont l'entrée reçoit la partie correspondante de la conduite de sortie appropriée (9/1, 9/2) et dont la première sortie est reliée au segment de conduite de dérivation de la conduite de sortie correspondante (9/1, 9/2), la seconde sortie étant reliée à l'un des deux chemins de conduite (34,35) et les électrovannes à 3/2 voies (32, 33) sont commutées par l'installation de commande électronique (24) pour la commande demandée du débit de liquide sous pression en fonction de deux positions de commutation chaque fois possibles.

12. Entraînement hydrostatique-mécanique selon la revendication 3, caractérisé en ce que pour surveiller les débits de liquide sous pression, on a prévu plusieurs capteurs de pression.

13. Entraînement hydrostatique-mécanique selon l'une des revendications 2 et 3, caractérisé en ce que pour éviter des surcharges de courte durée du moteur hydrostatique (HM) à cause d'une demande de puissance extrêmement élevée émanant des appareils auxiliaires entraînés, pour le débit d'huile sous pression (Q ou Q1 + Q2) alimentant le moteur hydrostatique (HM), il y a une conduite de dérivation (16) reliant la conduite d'huile d'entrée (9) et la conduite d'huile de retour (12), cette conduite de dérivation étant équipée d'une soupape de limitation de pression et/ou de court-circuit (17) pour injecter de l'huile sous pression dans la conduite de retour.

14. Entraînement hydrostatique-mécanique selon la revendication 1, caractérisé en ce que les transmissions (1, 2, 3, 4, 5) qui réalisent la liaison mécanique entre l'arbre du moteur hydrostatique (HM) et les arbres des appareils auxiliaires (L, W, K, G, P_{AG}) passent par un arbre auxiliaire (6) intermédiaire.

15. Entraînement hydrostatique-mécanique selon la revendication 2, caractérisé en ce que l'installation de commande électronique servant à la régulation du débit de liquide sous pression (Q) et du fonctionnement optimisé quant à la demande des appareils auxiliaires, de leur mise en oeuvre ou de leur arrêt ou encore de leur embrayage ou débrayage et assurant une alimentation suffisante en liquide hydraulique des organes de direction assistée (SL) comprend un microprocesseur, des mémoires de données de programme ainsi que des périphériques correspondants pour l'entrée et la sortie.

16. Entraînement hydrostatique-mécanique selon la revendication 3, caractérisé en ce que l'installation de commande électronique (24) servant à la régulation du débit d'huile sous pression alimentant le moteur hydrostatique (HM) et la direction assistée (SL) par une commutation appropriée de l'électrovanne (31) ou des électrovannes (29, 30, 32, 33) ainsi que pour obtenir un fonctionnement optimum quant à la consommation des appareils auxiliaires entraînés, le cas échéant pour leur mise en marche ou arrêt ou embrayage et débrayage comprend un microprocesseur, des mémoires de données de programme ainsi que des périphériques d'entrée et de sortie.

17. Entraînement hydrostatique-mécanique selon l'une des revendications 2 et 3, caractérisé en ce que le débit d'huile sous pression fourni au moteur hydrostatique (HM) par la régulation de l'installation de commande électronique (24) et provenant de l'installation d'alimentation en huile sous pression (DFA), est assuré dans le sens qu'en plus de l'optimisation de la vitesse de rotation des appareils auxiliaires (L, W, K, G, P_{AG}) entraînés par le moteur hydrostatique (HM), en liaison avec leur mise en oeuvre ou tout arrêt et embrayage et dêbrayage, les organes de la direction assistée (SL) reçoivent un débit minimum d'huile sous pression qui correspond à une pompe auxiliaire de direction, régulée, ainsi remplacée.

18. Entraînement hydrostatique-mécanique selon l'une des revendications 2 à 3, caractérisé en ce qu'un débit d'huile sous pression alimentant le moteur hydrostatique (HM), fourni de manière régulée par l'installation électronique de commande (24) par l'installation d'alimentation en huile sous pression (DFA), est assuré dans le sens que la pression de tràvail est limitée après coupure ou débrayage de certains appareils auxiliaires notamment du générateur (G) et/ou du compresseur d'air comprimé (K).
